## Europäisches Patentamt
## European Patent Office
## Office européen des brevets

(19)

(11) Veröffentlichungsnummer: **0 300 276**
**B1**

(12)

# EUROPÄISCHE PATENTSCHRIFT

(45) Veröffentlichungstag der Patentschrift:
**03.10.90**

(21) Anmeldenummer: **88110820.3**

(22) Anmeldetag: **07.07.88**

(51) Int. Cl.⁵: **A47G 1/04**, A47B 67/00,
A45D 42/18

(54) Toilettenspiegel.

(30) Priorität: **14.07.87 DE 8709653 U**
**14.07.87 DE 8709652 U**

(43) Veröffentlichungstag der Anmeldung:
**25.01.89 Patentblatt 89/4**

(45) Bekanntmachung des Hinweises auf die Patenterteilung:
**03.10.90 Patentblatt 90/40**

(84) Benannte Vertragsstaaten:
**AT CH DE FR IT LI NL**

(56) Entgegenhaltungen:
**FR-A- 798 525**
**FR-A- 811 385**
**US-A- 1 595 791**

(73) Patentinhaber: **sulzbacher möbelfabrik alwin jörger,**
**Heuweg, D-7502 Malsch(DE)**

(72) Erfinder: **Esslinger, Hartmut, Grenzweg 33,**
**D-7272 Altensteig(DE)**

(74) Vertreter: **Trappenberg, Hans, Postfach 1909,**
**D-7500 Karlsruhe 1(DE)**

ACTORUM AG

## Beschreibung

Die Erfindung betrifft einen Toilettenspiegel, bestehend aus einem Hauptspiegel und zwei beidseits um die Vertikalachse verschwenkbar am Hauptspiegel angebrachten Nebenspiegeln.

Derartige Toilettenspiegel sind zum Beispiel aus der FR-A 811 385 bekannt und werden in großer Stückzahl hergestellt. Der Hauptspiegel zeigt hierbei den Oberkörper einer davorsitzenden Person, die Nebenspiegel deren Seitenansicht. Bei den Nebenspiegeln ist insbesondere die Wiedergabe der Gesichtspartie interessant, so daß sie in ihren Ausmaßen bedeutend kleiner gehalten werden könnten als der Hauptspiegel. Dem steht allerdings die verschiedene Sitzhöhe der sich eines solchen Toilettenspiegels bedienenden Personen entgegen. Die Anbringung kleinerer Nebenspiegel hätte jedoch neben wirtschaftlichen Auswirkungen auch den Vorteil, daß diese Spiegel konkav ausgeführt werden könnten, die entsprechende Gesichtspartie also vergrößert und damit deutlicher wiedergeben könnten. Hierzu wäre allerdings eine Höheneinstellbarkeit dieser Nebenspiegel notwendig.

Aufgabe der Erfindung ist es, eine Möglichkeit anzugeben, wie die Nebenspiegel eines derartigen Toilettenspiegels so verkleinert werden können, daß sie tatsächlich nur noch die Gesichtspartie zeigen und damit auch das Anbringen vergrößernder Spiegel ermöglichen. Eine weitere Aufgabe ist hierbei, die Person und insbesondere die durch die Nebenspiegel erfaßten seitlichen Partien der diesen Toilettenspiegel benutzenden Person so zu beleuchten, daß sowohl die Frontpartie wie auch die Seitenpartien, auch in den vergrößernden Spiegeln, deutlich erkennbar sind.

Erreicht wird dies in erfindungsgemäßer Weise dadurch, daß die Abmessungen der Nebenspiegel nach Höhe und Breite bei dem 0,15- bis 0,4-fachen derjenigen des Hauptspiegels liegen, daß die Nebenspiegel an jeweils einem in einer seitlich am Hauptspiegel angebrachten Führungsschiene längs verschiebbaren Führungskloben höhenverschiebbar und in der gewünschten Höhe feststellbar angebracht sind und daß an den Nebenspiegeln Beleuchtungskörper angebracht sind.

Nicht mehr also wie bei den bekannten Toilettenspiegeln weisen die Nebenspiegel die gleiche Höhe wie der Hauptspiegel auf, sondern sie liegen hinsichtlich Höhe und Breite bei dem 0,15- bis 0,4-fachen dieses Hauptspiegels. Dadurch ist es ohne Schwierigkeiten möglich, Sonderspiegel einzusetzen, die insbesondere die Seitenpartien der diesen Toilettenspiegel benutzenden Person deutlich in vergrößertem Maßstabe wiederspiegeln. Um hierbei die Sitzhöhe der benutzenden Person berücksichtigen und die verschiedenen Gesichtspartien wiedergeben zu können, sind diese Nebenspiegel höhenverschiebbar und in der gewünschten Höhe feststellbar am Hauptspiegel angeordnet und zusätzlich auch noch mit einer Beleuchtung versehen, die die betrachteten Flächen deutlich ausleuchtet. Hierbei werden störende Schlagschatten, wie sie bei den bekannten Toilettenspiegeln immer wieder zu beobachten sind, vollkommen vermieden, insbesondere dann, wenn die nach der Erfindung vorzusehenden Beleuchtungskörper hinter den Nebenspiegeln angeordnet sind und die Verspiegelungsschicht eine Aussparung in Form eines hochstehenden Rechtecks aufweist, so daß dahinter ein langgestreckter Beleuchtungskörper angeordnet werden kann.

Hinsichtlich der Höhen-Einstellbarkeit der Nebenspiegel wird nach der Erfindung vorgeschlagen, daß in dem Führungskloben zumindest ein Dauerhaftmagnet, zu einer Führungsschienenwand weisend, angeordnet und zumindest die dem Haftmagneten benachbarte Wandung der Führungsschiene aus ferromagnetischem Material ist. Dadurch kann der Führungskloben mit dem daran angebrachten Nebenspiegel in der Führungsschiene gegen die Haftkraft des Magneten verschoben werden, bleibt jedoch sicher in der gewünschten Höhe, durch die Haftkraft dieses Magneten, fixiert. Hierzu muß allerdings die Haftkraft des Magneten so stark sein, daß er das Gewicht des Führungsklobens wie auch das des Nebenspiegels sicher tragen kann. Um das dadurch bedingte schwierige Verschieben zu vermeiden, wird nach der Erfindung weiterhin vorgeschlagen, daß die Führungsschiene zwei nebeneinander angeordnete Führungskanäle aufweist, daß in dem äußeren Führungskanal der Führungskloben und in dem inneren Kanal ein Gegengewicht zu dem Gewicht des Führungsklobens mitsamt dem daran angebrachten Nebenspiegel geführt ist und daß der Führungskloben mit diesem Gegengewicht über ein Seil, das über eine an der Oberseite der Führungsschiene angebrachte Seilrolle läuft, verbunden ist. Durch diese Anordnung wird das Gewicht des Führungsklobens mitsamt dem Gewicht des Nebenspiegels eliminiert, so daß eine leichte Verschiebemöglichkeit gegeben ist. Der jetzt auch noch vorgesehene Haftmagnet muß dadurch nur noch äußerst geringe Haftkräfte aufweisen, die ohne Schwierigkeiten beim Einstellen des Nebenspiegels in die gewünschte Höhe zu überwinden sind.

Auf der Zeichnung sind Ausführungsbeispiele des Erfindungsgegenstandes schematisch dargestellt, und zwar zeigen:

Fig. 1 die Ansicht eines derartigen Toilettenspiegels,

Fig. 2 diejenige eines Führungsklobens,

Fig. 3 die Stirnansicht einer Führungsschiene mit Führungskloben und

Fig. 4 in gleicher Ansicht eine Führungsschiene mit zwei Führungskanälen.

An einem Hauptspiegel (1) sind beidseitig in Führungsschienen (2) mittels Führungskloben (3) geführte Nebenspiegel (4, 5) höhenverstellbar angebracht. Hierzu sind die Nebenspiegel (4, 5) über ein Scharnier, das in einer Aussparung (6) im Führungskloben (3) eingeschraubt wird, befestigt. In die aus nichtferromagnetischem Material bestehende Führungsschiene (2) ist ein ferromagnetisches Band (8) eingelegt und an der Führungsschiene (2) befestigt, beispielsweise angeklebt. In dem Führungskloben (3) sind Vertiefungen (9) vorgesehen,in die Dauer-Haftmagnete (10) eingefügt sind. Das Festlegen des Führungsklobens (3) in der Führungsschiene (2) beziehungsweise der Nebenspiegel (4, 5) in der jeweils gewünschten Position erfolgt durch die in den Vertiefungen (9) angebrachten Dauer-Haftmagnete (10).

Ein Gewichtsausgleich zwischen dem Führungskloben (3) und dem an ihm befestigten Nebenspiegel (4, 5) erfolgt über ein Seil (7), das einerseits am Führungskloben (3) und andererseits an einem Gegengewicht (12) befestigt ist und über eine Seilrolle (11) läuft, die an der Oberseite der Führungsschiene (2) in einem Lagerbock (13) gelagert ist. Das Gegengewicht (12) läuft hierbei in einem zu dem Führungskanal (14) für den Führungskloben (3) benachbarten Führungskanal (15) in der Führungsschiene (2).

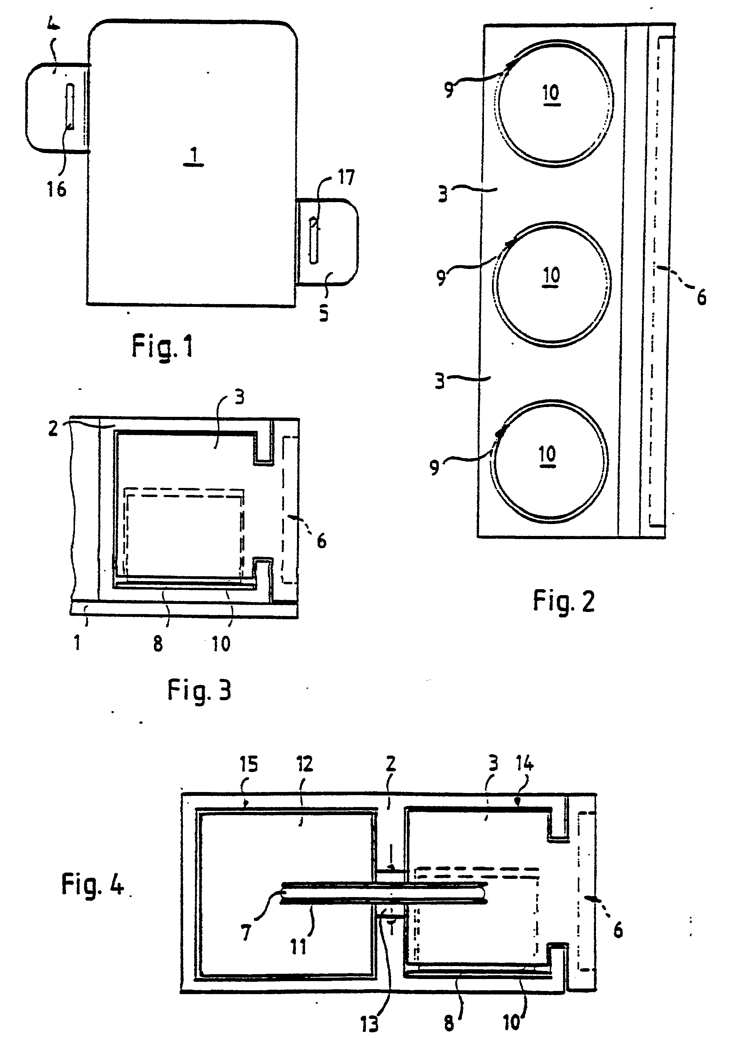

Wie aus Fig. 1 ersichtlich, ist die Verspiegelungsschicht der Nebenspiegel (4, 5) etwa in Form eines hochstehenden Rechtecks ausgespart. Jeweils hinter der Aussparung (16, 17) ist eine entsprechend langgezogene Beleuchtungsquelle angeordnet, so daß durch diese Aussparung (16, 17) Licht auf eine vor der Spiegelanordnung (1, 4, 5) sitzende beziehungsweise stehende Person fällt. Damit ist eine vollkommene Ausleuchtung der sich spiegelnden Person ohne störende Schlagschatten gegeben.

Besondere Ausführungsarten der Erfindung sind in den abhängigen Ansprüchen angegeben.

## Patentansprüche

1. Toilettenspiegel, bestehend aus einem Hauptspiegel und zwei beidseits um die Vertikalachse verschwenkbar am Hauptspiegel angebrachten Nebenspiegeln,
dadurch gekennzeichnet,
daß die Abmessungen der Nebenspiegel (4, 5) nach Höhe und Breite bei dem 0,15- bis 0,4-fachen derjenigen des Hauptspiegels (1) liegen, daß die Nebenspiegel (4, 5) an jeweils einem in einer seitlich am Hauptspiegel (1) angebrachten Führungsschiene (2) längsverschiebbaren Führungskloben (3) höhenverschiebbar und in der gewünschten Höhe feststellbar angebracht sind und daß an den Nebenspiegeln (4, 5) Beleuchtungskörper angebracht sind.

2. Toilettenspiegel nach Anspruch 1,
dadurch gekennzeichnet,
daß in dem Führungskloben (3) zumindest ein Dauerhaftmagnet (10) zu einer Führungsschienenwand weisend angeordnet und zumindest die dem Haftmagneten benachbarte Wandung der Führungsschiene aus ferromagnetischem Material ist.

3. Toilettenspiegel nach Anspruch 2,
dadurch gekennzeichnet,
daß der (die) Haftmagnet(e) (10) lose in eine Vertiefung (9) des Führungsklobens (3) eingelegt ist (sind).

4. Toilettenspiegel nach Anspruch 1,
dadurch gekennzeichnet,
daß die Führungsschiene aus nicht-ferrogmagnetischem Material ist und an der dem (den) Haftmagnet(en) (10) benachbarten Wandung ein ferromagnetisches Band angebracht ist.

5. Toilettenspiegel nach einem oder mehreren der vorhergehenden Ansprüche,
dadurch gekennzeichnet,
daß die Haftfläche des Haftmagneten (10) und/oder diejenige der benachbarten Wandung beziehungsweise des Bandes (8) mit einem gut gleitfähigen Kunststoff beschichtet ist (sind).

6. Toilettenspiegel nach einem oder mehreren der vorhergehenden Ansprüche,
dadurch gekennzeichnet,
daß die Führungsschiene (2) zwei nebeneinander angeordnete Führungskanäle (14, 15) aufweist, daß in dem äußeren Führungskanal (14) der Führungskloben (3) und in dem inneren Kanal (15) ein Gegengewicht (12) zu dem Gewicht des Führungsklobens (3) und des daran angebrachten Nebenspiegels (4, 5) geführt ist, und daß der Führungskloben (3) und das Gegengewicht (12) über ein Seil (7), das über eine an der Oberseite der Führungsschiene (2) angebrachte Seilrolle (11) läuft, miteinander verbunden sind.

7. Toilettenspiegel nach einem oder mehreren der vorhergehenden Ansprüche,
dadurch gekennzeichnet,
daß der Führungskloben (3) und/oder das Gegengewicht (12) mit einem Filzbelag versehen sind.

8. Toilettenspiegel nach Anspruch 1,
dadurch gekennzeichnet,
daß die Verspiegelungsschicht der Nebenspiegel (4, 5) jeweils über die Größe eines Beleuchtungskörpers ausgespart und hinter dieser Aussparung (16, 17) ein Beleuchtungskörper angebracht ist.

9. Toilettenspiegel nach Anspruch 8,
dadurch gekennzeichnet,
daß die Aussparung (16, 17) die Form eines hochstehenden Rechtecks aufweist und der Beleuchtungskörper langgestreckt ist.

10. Toilettenspiegel nach Anspruch 8 oder 9,
dadurch gekennzeichnet,
daß die Aussparungsfläche mattiert ist.

## Claims

1. Vanity mirror comprising a main mirror and two side mirrors situated on both sides of the main mirror such that they can turn about a vertical axis, characterised in that the height and width of the side mirrors (4, 5) is 0.15 to 0.4 multiple of the height and width of the main mirror (1), that each of the side mirrors (4, 5) is mounted so as to be displaceable and retainable at a desired height on a guide piston (3) which in turn is lengthwise displaceable on a guide rail (2) mounted on the side of the main mirror (1), and that lighting bodies are provided on the side mirrors (4, 5).

2. Vanity mirror according to claim 1, characterised in that at least one permanent magnet (10) is mounted in the guide piston (3) such that it faces a guide rail wall, and at least the wall of the guide rail adjacent to the magnet is made of ferromagnetic material.

3. Vanity mirror according to claim 2, characterised in that the magnet(s) (10) is (are) loosely inserted in a recess (9) of the guide piston (3).

4. Vanity mirror according to claim 1, characterised in that the guide rail is of non-ferromagnetic material and a ferromagnetic strip is provided on the wall adjacent to the magnet(s) (10).

5. Vanity mirror according to one or more of the preceding claims, characterised in that the attractive surface of the magnet (10) and/or the surface of the adjacent wall or of the strip (8) is (are) coated with a well slidable plastics material.

6. Vanity mirror according to one or more of the preceding claims, characterised in that the guide rail (2) has two guide channels (14, 15) arranged one next to the other, that in the outer guide channel (14) is guided the guide piston (3) and in the inner channel (15) is guided a counterweight (12) to the weight of the guide piston (3) and of the side mirror (4, 5) situated thereon, and that the guide piston (3) and the counterweight (12) are interconnected by a strand (7) which runs over a pulley (11) which is situated on the upper surface of the guide rail (2).

7. Vanity mirror according to one or more of the preceding claims, characterised in that the guide piston (3) and/or the counterweight (12) is provided with a felt coating.

8. Vanity mirror according to claim 1, characterised in that the metal coating of the side mirrors (4, 5) is provided with a recess the size of which corresponds to the size of a lighting body and behind this recess (16, 17) is situated a lighting body.

9. Vanity mirror according to claim 8, characterised in that the recess (16, 17) has the shape of a rectangle the longer sides of which are upright, and the lighting body is elongated.

10. Vanity mirror according to claim 8 or 9, characterised in that the surface of the recess is made opaque.

**Revendications**

1. Miroir de toilette composé d'un miroir principal et de deux miroirs latéraux qui sont montés sur les deux côtés du miroir principal en pouvant pivoter autour de l'axe vertical, caractérisé par le fait que les dimensions des miroirs latéraux (4, 5) en hauteur et en largeur sont comprises entre 0,15 et 0,4 fois celles du miroir principal (1), par le fait que les miroirs latéraux (4, 5) sont montés chacun sur un gond de guidage (3) qui peut être déplacé longitudinalement dans un rail de guidage (2) monté latéralement sur le miroir principal (1), de façon à pouvoir être déplacés en hauteur et fixés à la hauteur voulue, et par le fait que des organes d'éclairage sont montés sur les miroirs latéraux (4, 5).

2. Miroir de toilette selon la revendication 1, caractérisé par le fait qu'au moins un aimant permanent d'adhérence (10) dirigé vers une paroi du rail de guidage est disposé dans le gond de guidage (3), et qu'au moins la paroi du rail de guidage qui est contiguë à l'aimant d'adhérence est en une matière ferromagnétique.

3. Miroir de toilette selon la revendication 2, caractérisé par le fait que le ou les aimants d'adhérence (10) sont insérés de manière lâche dans un enfoncement (9) du gond de guidage (3).

4. Miroir de toilette selon la revendication 1, caractérisé par le fait que le rail de guidage est en une matière non ferromagnétique et qu'une bande ferromagnétique est montée sur sa paroi contiguë à l'aimant ou aux aimants d'adhérence (10).

5. Miroir de toilette selon une ou plusieurs des revendications précédentes, caractérisé par le fait que la surface d'adhérence des aimants d'adhérence (10) et/ou celle de la paroi contiguë ou de la bande (8), respectivement, est revêtue d'une matière synthétique antifriction.

6. Miroir de toilette selon une ou plusieurs des revendications précédentes, caractérisé par le fait que le rail de guidage (2) comporte deux canaux de guidage (14, 15) disposés l'un à côté de l'autre, par le fait que le gond de guidage (3) est guidé dans le canal de guidage extérieur (14), et qu'est guidé dans le canal de guidage intérieur (15) un contre-poids (12) pour le poids du gond de guidage (3) et du miroir latéral (4, 5) qui est monté sur lui, et par le fait que le gond de guidage (3) et le contre-poids (12) sont reliés entre eux par un câble (7) qui passe sur une poulie (11) montée à la partie supérieure du rail de guidage (2).

7. Miroir de toilette selon une ou plusieurs des revendications précédentes, caractérisé par le fait que le gond de guidage (3) et/ou le contre-poids (12) sont munis d'un revêtement de feutre.

8. Miroir de toilette selon la revendication 1, caractérisé par le fait que la couche réfléchissante des miroirs latéraux (4, 5) est à chaque fois évidée selon les dimensions d'un organe d'éclairage, et qu'un organe d'éclairage est monté derrière cet évidement (16, 17).

9. Miroir de toilette selon la revendication 8, caractérisé par le fait que l'évidement (16, 17) présente la forme d'un rectangle vertical et que l'organe d'éclairage est allongé.

10. Miroir de toilette selon la revendication 8 ou 9, caractérisé par le fait que la surface de l'évidement est dépolie.

Fig. 1

Fig. 2

Fig. 3

Fig. 4